# EUROPÄISCHE PATENTSCHRIFT

(11) **EP 0 780 626 B1**
(45) Veröffentlichungstag und Bekanntmachung des Hinweises auf die Patenterteilung: **07.08.2002**
(21) Anmeldenummer: 96120684.4
(22) Anmeldetag: 20.12.1996
(51) Int. Cl.: F21V 7/09, B29C 33/38, B29C 33/42, B29D 11/00

(54) **Reflektor für eine Leuchte und damit ausgerüstete Leuchte**
Reflector for a lighting and corresponding lighting
Réflecteur pour luminaire et luminaire comportant un tel réflecteur

(30) Priorität: 22.12.1995 DE 19548402; 19.09.1996 DE 19638367
(43) Veröffentlichungstag der Anmeldung: 25.06.1997
(73) Patentinhaber: Zumtobel Staff GmbH, 6850 Dornbirn (AT)
(72) Erfinder: Bohle, Markus, Dipl.-Ing., 6850 Dornbirn (AT); Sejkora, Günther, Dr., 6867 Schwarzenberg (AT); Wolber, Wolfgang, Dr., 6840 Götzis (AT)
(74) Vertreter: Schmidt-Evers, Jürgen, Dipl.-Ing.

(56) Entgegenhaltungen:
- EP-A- 0 678 703
- DE-A- 4 339 338
- FR-A- 1 243 347
- GB-A- 255 589
- US-A- 5 034 867

## Beschreibung

Die Erfindung bezieht sich auf einen Reflektor und auf eine Leuchte mit einem solchen Reflektor nach dem Oberbegriff des Anspruchs 1 oder 13.

Es ist der Zweck eines Reflektors, die von der Lampe oder Lichtquelle einer Leuchte ausgehenden Lichtstrahlen in eine bestimmte Strahlrichtung zu reflektieren. Hierdurch werden die von der Lichtquelle erzeugte Lichtenergie weitgehend ausgenutzt und die Leistung der Leuchte verbessert.

Es ist bekannt, die Reflexionsfläche eines Reflektors mit einer Facettenstruktur zu versehen, die aus von einander beabstandeten oder aneinander angrenzenden Facettenflächen bestehen kann. Facetten dienen einerseits dazu, das Licht der Lampe bei der Reflexion in einem kleinen Winkelbereich zu streuen und dadurch eine homogenere, gleichmäßigere Lichtverteilung zu erzielen. Andererseits wird das direkt reflektierte Bild der Lampe durch die Facetten in viele einzelne, kleine Bilder aufgelöst. Dieses Erscheinungsbild wird von dem Betrachter als angenehmer empfunden, da die subjektive Blendung reduziert wird. Die Facetten werden im allgemeinen so angeordnet, daß der gesamte oder zumindest ein größerer zusammenhängender Bereich der Reflexionsfläche des Reflektors mit Facetten bedeckt ist.

Es ist bereits vorgeschlagen worden, bei einem als Kunststoff-Spritzgießteil ausgebildeten Reflektor die Facettenflächen beim Spritzgießen des Reflektors in einem Spritzgießwerkzeug anzuformen. Das aus einem äußeren und einem inneren Formteil bestehende Spritzgießwerkzeug weist auf der Innen-Formfläche die Facettenflächen als ebene Negativflächen auf, die mit einem ebenen Schleifwerkzeug auf der konvex gekrümmten Innen-Formfläche eingearbeitet sind. Diese bekannten Facettenflächen eignen sich nur für in zwei orthogonale Richtungen konkav gekrümmte Reflektorflächen.

Ein Reflektor nach dem Oberbegriff des Anspruches 1 ist in der DE 43 39 338 oder GB 255 589 A beschrieben.

Die DE 43 39 338 zeigt zwar einen Reflektor, der einen im wesentlichen geraden profilierten Abschnitt aufweist, jedoch sind die vorhandenen Facettenflächen an pyramidenstumpfförmigen Vorsprüngen angeordnet (Fig. 21), bei denen es sich deshalb um keine Facettenflächen im üblichen Sinne handelt, und die bereits aus Gründen einer Schattenbildung bedenklich sind.

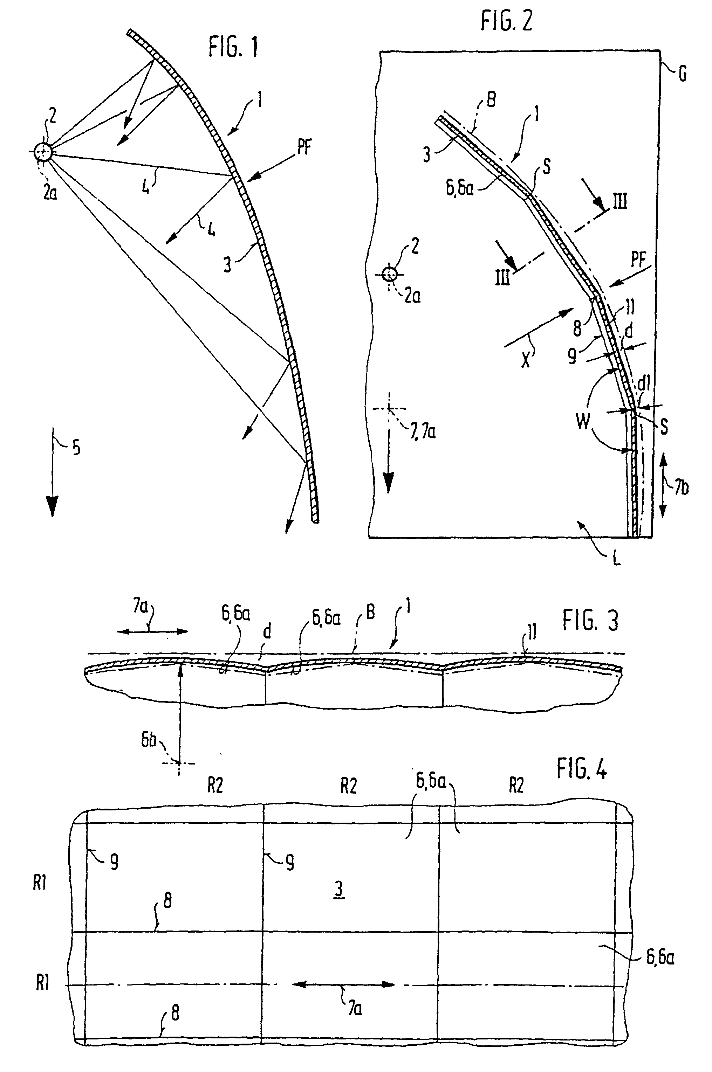

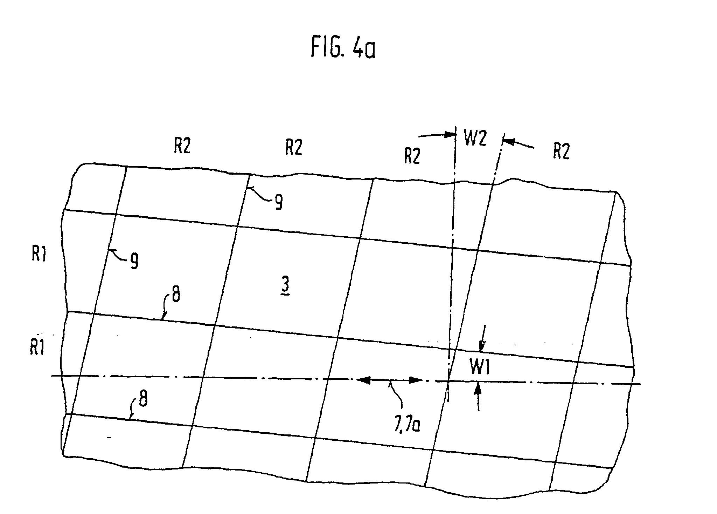

Die GB 255 589 A zeigt einen Reflektor mit einem sich im wesentlichen gerade erstreckenden profilierten Abschnitt, an dessen Reflexionsseite konkave Facettenfelder angeordnet sind, wie es insbesondere die Schnittdarstellung gemäß Fig. 4 zeigt. Dieser bekannte Reflektor besteht aus Metall, insbesondere Aluminium, wobei die konkaven Facettenfelder geschlagen, gegossen oder gepreßt sein können (siehe Seite 2, Zeilen 37-43). Bei dieser bekannten Ausgestaltung bedarf es einer konvexen Form (Negativfläche) der die konkaven Facettenfelder formenden Formflächenabschnitte an einem zugehörigen Formwerkzeug, das in dieser Druckschrift jedoch nicht beschrieben ist. Ein solches Formwerkzeug ist schwierig und nur mit großem Aufwand herzustellen, da die Ausarbeitung von vorstehenden Formabschnitten diesen Aufwand bedingt.

Der Erfindung liegt die Aufgabe zugrunde, einen Reflektor oder eine Leuchte nach den Oberbegriffen der Ansprüche 1 oder 13 zu vereinfachen und dabei eine einfache und kostengünstige Herstellung zu erreichen.

Diese Aufgabe wird durch die Merkmale der Ansprüche 1 oder 13 gelöst.

Bei der erfindungsgemäßen Ausgestaltung weisen die die Reflexionsflächen bildenden Facettenfelder bzw. Facettenflächen in der Profillängsrichtung eine von der Profillängsrichtung abweichende Form auf, die eine Struktur der Facettenflächen an der Reflexionsfläche in der Profillängsrichtung ermöglicht, wobei in dieser Profillängsrichtung entweder zwischen den Facettenflächen und der übrigen Reflexionsfläche oder zwischen benachbarten Facettenflächen sich Flächendurchdringungskanten ergeben. Die Facettenflächen können somit einen Abstand voneinander aufweisen oder ineinander übergehen. Die erfindungsgemäße Ausgestaltung ermöglicht somit solche Reflektorflächen mit Facetten zu versehen, die auf wenigstens einem Abschnitt ihrer Länge Profilform aufweisen.

Die erfindungsgemäße Ausgestaltung eignet sich für Reflexionsflächen, die bezüglich einer Lichtquelle konkav oder konvex sind. Dabei kann es sich auch um eine Reflexionsfläche handeln, die beide vorgenannten Formgebungen aufweist. Dies ist bei Leuchten der Fall, bei denen die Lichtquelle eine gerade langgestreckt Form aufweist, z.B. die Form einer Röhre. Bei solchen Leuchten erstreckt sich die Reflexionsfläche oder der Reflektor insgesamt in der Längsrichtung der Lichtquelle gerade, wobei er quer zu dieser Längsrichtung konkav und konvex geformt, z.B. abgewinkelt oder insbesondere gekrümmt, sein kann und somit auch eine S-förmige Form aufweisen kann.

Im Rahmen der Erfindung ist es möglich, einen erfindungsgemäßen Reflektor sowohl aus einem spritzgießfähigem Material, insbesondere Kunststoff, als auch aus einem prägbaren Material, insbesondere Metall, zu fertigen. Im ersteren Fall läßt sich der Reflektor durch Spritzgießen oder Spritzpressen in einem Formwerkzeug spritzen, bestehend aus wenigstens zwei Formwerkzeugteilen, dessen der Reflektorfläche zugehöriges Formwerkzeugteil die Reflektorflächen als Negativflächen aufweist. Im zweiten Fall läßt sich der Reflektor durch Prägen in einer Prägevorrichtung mit zwei Prägevorrichtungsteilen herstellen, deren der Reflektorfläche zugehöriges Prägevorrichtungsteil die Reflektorflächen als Negativform aufweist.

In den Unteransprüchen sind Merkmale enthalten, die weitere Strukturformen der Reflexionsfläche ermöglichen und dabei die Lichtverteilung hinsichtlich einer subjektiven Blendung des Betrachters verbessern, und eine einfache und kostengünstig herstellbare Formgebung und konstruktive Ausgestaltung der Leuchte bzw. des Reflektors ermöglichen.

Nachfolgend werden die Erfindung und weitere durch sie erzielbare Vorteile anhand von bevorzugten Ausführungsbeispielen und Zeichnungen näher erläutert. Es zeigt.
- Fig. 1: einen Reflektor im Querschnitt in bekannter Ausgestaltung;
- Fig. 2: eine erfindungsgemäße Leuchte mit einem Reflektor im Querschnitt;
- Fig. 3: den Schnitt III-III in Fig. 2;
- Fig. 4 und 4a: je einen Teilbereich der Reflektorfläche des erfindungsgemäßen Reflektors in schematischer Darstellung nach Fig. 2 in einer Blickrichtung längs des Pfeiles X in Fig. 2;
- Fig. 5: einen der Fig. 2 entsprechenden Schnitt durch einen erfindungsgemäßen Reflektor in abgewandelter Ausgestaltung;
- Fig. 6: einen Teilbereich der Reflektorfläche des Reflektors nach Fig. 5 in einer der Fig. 4 entsprechenden Blickrichtung gemäß Pfeil X in Fig. 5;
- Fig. 7: einen erfindungsgemäßen Reflektor bestehend aus Seitenreflektoren und Querlamellen für eine Leuchte mit einer langgestreckten und sich gerade erstreckenden, insbesondere röhrenförmigen, Lichtquelle;
- Fig. 8: eine Querlamelle des Reflektors gemäß Fig. 7 im Schnitt;
- Fig. 9: eine Gegenüberstellung zum einen der Durchdringungskanten zwischen einer Reflexions-Basisfläche und Facetten, die durch ein Werkzeug in die Reflexions-Basisfläche eingearbeitet sind und zum anderen der realen Durchdringungskanten zwischen ineinander übergehenden Facetten, wobei die Facetten bezüglich jeweils benachbarter Reihen nicht versetzt zueinander angeordnet sind;
- Fig. 10: eine Gegenüberstellung zum einen der Durchdringungskanten zwischen einer Reflexions-Basisfläche und Facetten, die durch ein Werkzeug in die Reflexions-Basisfläche eingearbeitet sind und zum anderen der realen Durchdringungskanten zwischen ineinander übergehenden Facetten, wobei die Facetten bezüglich jeweils benachbarter Reihen versetzt zueinander angeordnet sind;
- Fig. 11: ein Prägewerkzeug zum Prägen eines Reflektors in vereinfachter perspektivischer Darstellung;
- Fig. 12: eine Einzelheit des Prägewerkzeugs im Schnitt bei seiner Herstellung mit einem Werkzeug;
- Fig. 13: den Teilschnitt XIII-XIII in Fig. 12;
- Fig. 14: eine Einzelheit des Prägewerkzeuges im Schnitt bei seiner Herstellung mit einem abgewandelten Werkzeug;
- Fig. 15: den Teilschnitt XV-XV in Fig. 14;
- Fig. 16: einen erfindungsgemäßen Reflektor in weiter abgewandelter Ausgestaltung und in perspektivischer Darstellung;
- Fig. 17: den Reflektor nach Fig. 16 im vertikalen Schnitt;
- Fig. 18: ein Formwerkzeug für einen erfindungsgemäßen Reflektor in vereinfachter Seitenansicht;
- Fig. 19: ein inneres Formwerkzeugteil des Formwerkzeugs gemäß Fig. 18 in der Draufsicht.

Bei dem in Fig. 1 mit 1 bezeichneten Reflektor, der nicht in seiner Gesamtheit sondern nur teilweise dargestellt ist, handelt es sich um einen solchen für eine in Fig. 1 nicht dargestellte Leuchte mit einer länglichen und sich gerade erstreckenden Lichtquelle 2, z.B. in Form einer Leuchtstoffröhre. Der Reflektor 1 kann aus Metallblech oder dünnem Kunststoff bestehen, wobei er quer zur Längsachse 2a der Lichtquelle 2 konkav gekrümmt ist, so daß auch seine der Lichtquelle 2 zugewandte Reflexionsfläche 3 konkav gekrümmt ist. Es kann sich um eine Krümmung im Sinne eines Kreisabschnitts oder um eine unregelmäßige Krümmung, z. B. in Form eines elliptischen oder parallelförmigen Bogens handeln. Bei der in Fig. 1 dargestellten Anordnung handelt es sich um eine das Licht in eine bestimmte Richtung verbreitende Leuchte, z.B. Deckenleuchte, mit zwei einander gegenüberliegenden Reflektoren 1, die bezüglich der Lichtquelle 2 spiegelsymmetrisch zueinander geformt sind und von denen nur der eine Reflektor 1 dargestellt ist. Die vereinfacht dargestellten Lichtstrahlen 4 werden an der Reflexionsfläche 3 reflektiert, wobei die Reflexionsstrahlen eine allgemein mit einem resultierenden Pfeil 5 dargestellte Beleuchtungsrichtung gerichtet sind.

Bei der erfindungsgemäßen Leuchte L oder dem erfindungsgemäßen Reflektor 1 nach Fig. 2, bei denen gleiche oder vergleichbare Teile mit gleichen Bezugszeichen versehen sind, ist der Reflektor 1 auf seiner Reflexionsfläche 3 mit allgemein mit 6 bezeichneten Facetten versehen, die in kreuzweise verlaufenden Reihen R1, R2 angeordnet sind und aneinander angrenzen, so daß sich in etwa eine karo-förmige Facettenstruktur ergibt. Wie bereits der bekannte Reflektor 1 weist auch der erfindungsgemäße Reflektor 1 wenigstens auf seiner Reflexionsseite, vorzugsweise beidseitig, eine Profilform PF auf, die konkav (dargestellt) oder auch konkav und konvex (S-förmig) sein kann. Die Reihe R1 ist in der Längsrichtung der Mittelachse 7 der konkaven Form bzw. der Profillängsrichtung 7a des Reflektors 1 angeordnet, während die Reihe R2 quer zur Achse 7 bzw. in Profilquerrichtung 7b verläuft, d.h. in Umfangsrichtung der Krümmung des Reflektors 1 bzw. seiner Reflektorfläche 3. Von der Leuchte L sind nur ein angedeutetes Gehäuse G, der Reflektor 1 und die Lichtquelle 2 dargestellt, die am Gehäuse G gehalten sind.

Die Facetten 6 sind durch Reflexionsteilflächen ergebende Facettenflächen 6a gebildet. Die Facettenflächen 6a sind - im Profillängsschnitt nach Fig. 3 gesehen - konkave oder konvexe - oder trommel zylinderabschnittförmige Krümmungsflächen, d.h. im Profillängsschnitt regelmäßig gekrümmte Krümmungsflächen, deren Krümmungsachse 6b quer zur Mittelachse 7 gerichtet ist. Facettenflächen 6a in Form von z.B. ebenen Schrägflächen sind in Fig. 3 als zickzackförmige bzw. dachförmige Schrägflächen strichpunktiert dargestellt.

Im Profilquerschnitt gesehen schließen die sich vorzugsweise gerade erstreckenden Facettenflächen 6a einen stumpfen Winkel W ein, dessen Größe von der Größe der Krümmung des Reflektors 1 und von der Größe der Facettenflächen 6a abhängig ist und etwas kleiner als 180° ist. Aufgrund dieser Ausgestaltung der Facettenflächen 6a ergeben sich in der Längsrichtung der Reihen R1 verlaufende Durchdringungslinien 8, die sich jeweils im Scheitel des zugehörigen Winkels W befinden, und längs der Reihe R2 verlaufende Durchdringungslinien 9. Mir B ist eine Basiskurve bezeichnet, die parallel zur konkaven Form verläuft und von der die Facettenflächen 6a jeweils einen gleichen Abstand und eine gleiche Relativstellung aufweisen.

Die Facettenflächen 6a weisen somit sowohl im Profillängsschnitt eine von der Profillängsrichtung 7a als auch im Profilquerschnitt eine von der Basiskurve B der konkaven Form abweichende Form oder Lage auf.

Die Ausgestaltung nach Fig. 4a, bei der gleiche oder vergleichbare Teile mit gleichen Bezugszeichen versehen sind, unterscheidet sich von der vorbeschriebenen Ausgestaltung dadurch, daß die Reihen R1, R2 bzw. die Durchdringungslinien 8, 9 nicht parallel zur Mittelachse 7 oder in längsgerichteten Diagonalebenen oder in rechtwinkligen Querebenen der Mittelachse 7, sondern schräg bzw. geneigt dazu verlaufen. Dabei können die Durchdringungslinien 8,9 gleiche oder unterschiedliche spitze Winkel W1, W2 zueinander einnehmen.

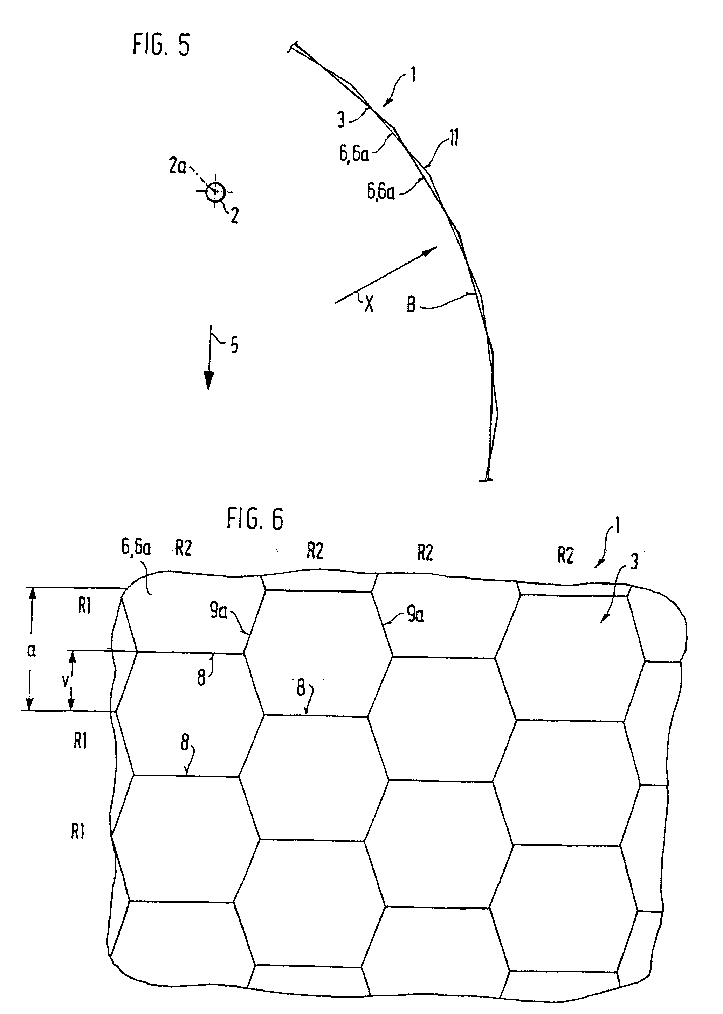

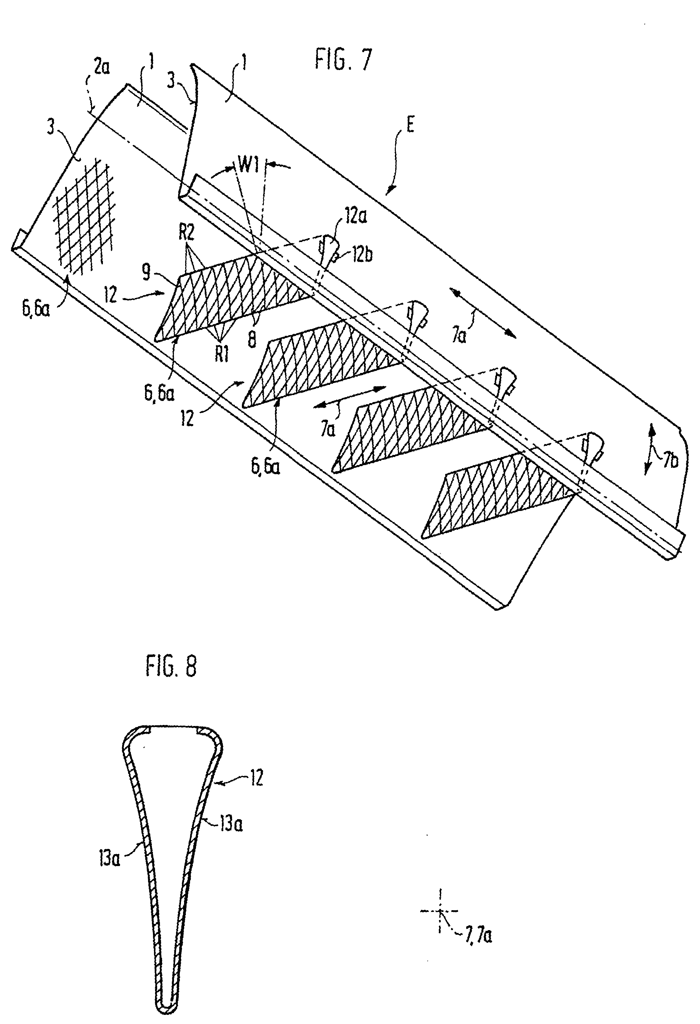

Die Ausgestaltung nach Fig. 5 und 6, bei der gleiche oder vergleichbare Teile ebenfalls mit gleichen Bezugszeichen versehen sind, unterscheidet sich von der Ausgestaltung gemäß den Fig. 2 bis 4 lediglich dadurch, daß die sich quer zur Mittelachse 7 bzw. in Umfangsrichtung der Krümmung der Reflexionsfläche 3 erstreckenden Reihen R2 versetzt zueinander angeordnet sind. Das mit v bezeichnete Versatzmaß kann verschieden groß sein. Bei der vorliegenden Ausgestaltung beträgt das Versatzmaß v etwa die Hälfte der sich parallel zum Versatz erstreckenden Abmessung a der Facettenflächen 6a. Die Krümmung der Facettenflächen 6a ist bei diesem Ausführungsbeispiel gleich der Krümmung gemäß Fig. 3 ausgebildet. Aufgrund der versetzten Anordnung ergeben sich jedoch unterschiedliche Durchdringungslinienformen der hier mit 9a bezeichneten Durchdringungslinien. Bei dieser versetzten Struktur der Facetten 6 sind die sich in den Querreihen R2 erstreckenden Facettenflächen 6a in einer sich längs zu diesen Reihen R2 erstreckenden Linie angeordnet, während die sich in den Längsreihen R1 befindlichen Facettenflächen 6a versetzt zueinander angeordnet sind.

Bei den erfindungsgemäßen Ausgestaltungen können die Reflektoren 1 aus gleichdickem Material bestehen, so daß die Außenfläche 11 der Reflektoren 1 parallel zur Reflexionsfläche 3 verläuft. Dabei können die Facettenflächen 6a nach innen und/oder nach außen von der Profillängsrichtung 7a und/oder von der Basiskurve B der konkaven Form abweichen, wobei die Facettenflächen 6a mit d bezeichnete Verdickungen bilden. Im ersten Fall sind diese bezüglich der in den Scheiteln S der Winkel W befindlichen Dicke d1 nach innen verdickt.

Fig. 7 zeigt einen mit erfindungsgemäßen Facetten 6 ausgestalteten Reflektor, der mit zwei bereits beschriebenen, einander gegenüberliegend angeordneten und zu einer in Fig. 7 nicht dargestellten Lichtquelle spiegelsymmetrisch geformten Reflektoren 1 und diese miteinander verbindenden und haltenden Querlamellen oder Querreflektoren 12 eine vorgefertigte Baueinheit E bilden. Alle Reflektoren 1, 12 bestehen aus dünnem Material, insbesondere Blech. Die Querreflektoren 12 weisen einen keilförmigen Querschnitt auf (Fig. 8), wobei es sich vorzugsweise um Hohlprofile mit vorzugsweise konkav geformten Flanken handelt, die Reflexionsflächen 13 bilden, die sich in der Profillängsrichtung 7a der Querreflektoren 12 gerade erstrecken und quer dazu, hier in der Vertikalen, konkav gekrümmt sind.

Es ist vorteilhaft, die Querreflektoren 12 aus im Querschnitt V-förmigen Hohlprofilen herzustellen, die Durchbrüche 12a entsprechender Form in den Reflektoren 1 durchsetzen und durch umgebogene Sicherungszungen 12b gesichert sind.

Wie Fig. 7 deutlich zeigt, weisen die Querreflektoren 12 auf ihren Reflexionsflächen 13a Facetten 6 mit Facettenflächen 6a auf, die im wesentlichen der vorbeschriebenen Ausgestaltung entsprechen, wobei die Reihe R1 vertikal und R2 horizontal verläuft und wobei die Facetten längs der Riehe R1 wie in der Figur 6 versetzt angeordnet sind. Allerdings ist der Abstand zwischen den Reihen R2 so klein, daß die Durchdringungslinien 9 verschwinden.

Wie bereits erwähnt, ist es im Rahmen der Erfindung möglich und zwecks Verringerung der subjektiven Blendwirkung vorteilhaft, Facettenflächen 6a auch an den Reflexionsflächen 3 der Reflektoren 1 in Fig. 7 anzuordnen, was aus Vereinfachungsgründen nur in einem kleineren Bereich dargestellt ist. Diese Struktur der Facetten 6 entspricht der Anordnung gemäß der Struktur der Facetten 6 an den Querreflektoren 12, so daß sich auch hier rautenförmige Facettenflächen 6a ergeben.

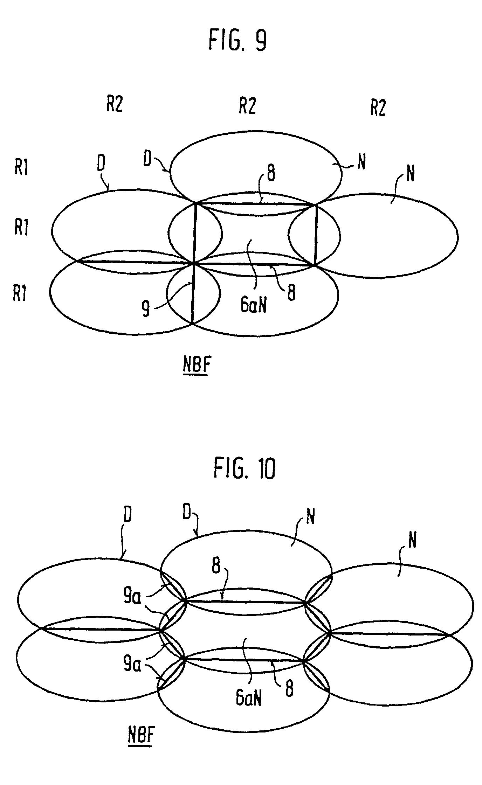

Wie bereits erwähnt, lassen sich die Facetten 6 durch entsprechende Negativflächen an einem Werkzeug zum Herstellen des jeweiligen Reflektors, z.B. ein Form- oder Prägewerkzeug, herstellen. Die Form der Facetten ergibt sich dabei durch die Lage zueinander der mittels eines spanabhebenden Bearbeitungswerkzeugs, beispielsweise eines Schleifwerkzeugs, aufgebrachten Bearbeitungsflächen aufgrund allgemein bekannter geometrischer Beziehungen, siehe Fig. 9 und 10. Darin sind mit D die Begrenzungskanten der die Facettenflächen 6a bildenden Negativflächen N bezeichnet, die gemäß Fig. 9 in den Reihen R1, R2 angeordnet sind, und die Negativfacettenflächen 6aN zwischen den Begrenzungskanten 8,9,9a bilden. Gemäß Fig. 9 sind die Negativfacettenflächen 6aN in den Reihen R1, R2 angeordnet. Dagegen sind gemäß Fig. 10 die Negativfacettenflächen 6aN der Reihen R2 bezüglich denen in den Reihen R1 versetzt angeordnet, vorzugsweise mittig versetzt, siehe Fig. 6. Die die Negativflächen N enthaltenden Flächen am Werkzeug, z.B. Präge- oder Gießwerkzeug, sind mit Negativbasisflächen NBF bezeichnet.

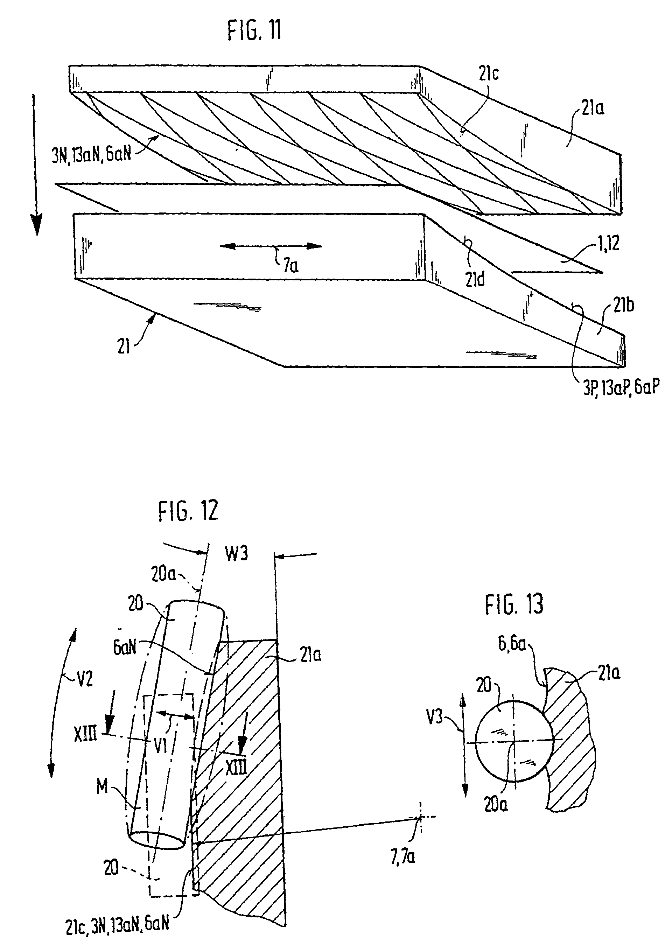

Vorzugsweise dann, wenn die Reflektoren 1, 12 aus Metallblech bestehen, lassen sich die Facettenflächen 6a durch ein Prägen oder Drücken der Reflektoren 1, 12 quer zur Reflexionsfläche 3, 13 herstellen. Dies kann durch das in Fig. 11 mit 21 bezeichnete Prägewerkzeug erfolgen, das aus zwei Prägewerkzeugteilen 21a, 21b besteht, deren einander zugewandte Flächen Prägeflächen 21c, 21d sind, von denen die der Reflexionsfläche 3, 13 zugewandte Prägefläche 21c ein Negativ 3N, 13N, 6aN der zugehörigen Reflexionsfläche 3, 13 einschließlich der Facettenflächen 6a ist. Dagegen ist die Prägefläche 21d des anderen Prägewerkzeugteils 21b als Positiv 3P, 13P, 6aP entsprechend der Reflexionsfläche 3, 13 einschließlich der zugehörigen Facettenflächen 6a ausgebildet bzw. geformt.

Zum Prägen der Facetten 6 wird ein vereinfacht dargestellter Reflektor 1, 12 zwischen die Prägewerkzeugteile 21a, 21b angeordnet und dann werden die Prägewerkzeugteile mittels einem geeigneten Antrieb und zugehörigen Führungen (nicht dargestellt) zusammengepreßt, wobei die Facetten 6 am dazwischen befindlichen Reflektor 1,12 geprägt werden. Nach einer Distanzierung der Prägewerkzeugteile 21a, 21b voneinander kann der soweit fertig geprägte Reflektor 1, 12 aus dem Prägewerkzeug 21 entfernt werden.

Das Negativ 6aN der Facettenflächen 6a an der Prägefläche 21c kann durch spanabhebende Bearbeitung, insbesondere durch Fräsen oder Schleifen mit einem walzenoder scheibenförmigen Schleifkörper erzeugt werden, siehe Fig. 12 bis 15. Bei der Ausgestaltung gemäß Fig. 12 und 13 ist ein walzenförmiger Schleifkörper 20 vorgesehen, der mittels einer nicht dargestellten Lager- und Haltevorrichtung mit einem zugehörigen Antrieb verstellbar gelagert und gehalten ist. Der Schleifkörper 20 ist um seine quer zur Achse 7 bzw. in Umfangsrichtung der konkaven Form, hier der Krümmung, verlaufenden Drehachse 20a drehbar gelagert. Des weiteren ist der Schleifkörper 20 mittels der Lagerund Haltevorrichtung in mehreren Freiheitsgraden verstellbar und in der jeweiligen Verstellposition feststellbar. Eine erste Verstellbewegung ist quer zur konkaven Form bzw. der Krümmung gerichtet und mit dem Doppelpfeil V1 verdeutlicht. Eine zweite Verstellbewegung ist in der Umfangsrichtung der konkaven Form bzw. der Krümmung gerichtet und mit V2 bezeichnet. Eine dritte Verstellbewegung V3 ist etwa parallel zur Mittelachse 7 bzw. Profillängsrichtung 7a gerichtet. Die Mantelfläche M des Werkzeugs 20 entspricht in ihrer Größe und Form der gewünschten Facettenfläche 6a. Wie Fig. 12 zeigt, kann die Form des Werkzeugs 20 bezüglich seiner Drehachse 20a zylindrisch sein oder tonnenförmig sein, wie es andeutungsweise dargestellt ist.

Wesentlich ist, daß die Mantelfläche des Werkzeugs 20 parallel zur Mittelachse 7 als auch in Umfangsrichtung der konkaven Form von der Kontur der Negativbasisfläche NBF abweicht. Dies ist sowohl durch die zylindrische als auch tonnenförmige Querschnittsform des Werkzeugs 20 gegeben. In Fig. 12 ist ein in der Richtung der Verstellbewegung V3 verstelltes Werkzeug 20 mit gestrichelten Linien dargestellt.

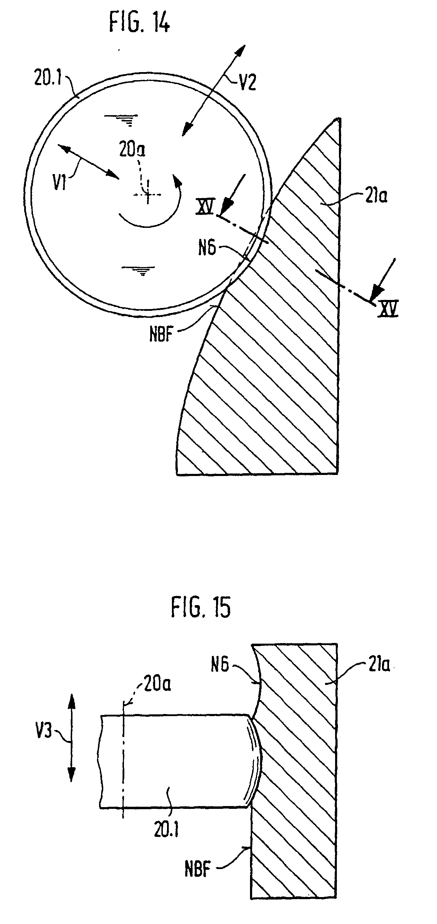

Bei der Ausgestaltung gemäß Fig. 14 und 15, bei der gleiche oder vergleichbare Teile mit gleichen Bezugszeichen versehen sind, ist ein Werkzeug 20.1 vorgesehen, das um eine etwa parallel zur Mittelachse 7 gerichtete Drehachse 20d entsprechend drehbar ist. Dieses Werkzeug 20.1 ist vorzugsweise scheibenförmig ausgebildet, wobei seine Mantelfläche konvex gekrümmt bzw. ballig ist, um eine abweichende Kontur bezüglich der Mittelachse 7 zu erhalten.

Zum spanabhebenden Einarbeiten der Negativfacettenflächen 6aN wird das Werkzeug 20, 20.1 gemäß den nachfolgend beschriebenen Verfahrensschritten jeweils in der gewünschten Einarbeitungstiefe gegen die Negativbasisfläche NBF bewegt. Danach wird das Werkzeug 20, 20.1 von der Negativbasisfläche NBF in der entsprechenden Verstellrichtung V1 beabstandet und zur Einarbeitung der Negativfacettenflächen 6aN in der Reihe R1 oder R2 von der jeweils zugehörigen Einarbeitungsposition zur nächsten Einarbeitungsposition bewegt, gegen die Negativbasisfläche NBF und wieder zurückbewegt sowie in der jeweiligen Bewegungsstellung festgestellt und sofort. Wenn die Negativfacettenflächen 6aN in der jeweiligen Reihe R1, R2 fertig sind, wird das Werkzeug 20, 20.1 in die nächste Reihe R1, R2 bewegt.

Bei der vorbeschriebenen Ausgestaltung ist das Werkzeugteil 21a unbeweglich gehalten, während das Werkzeug 20, 20.1 verstellbar ist. Im Rahmen der Erfindung ist es auch möglich, ein oder mehrere der Verstellbewegungen V1, V2, V3 mit dem betreffenden Werkzeugteil auszuführen, wozu dieses mittels einer Verstell- und Feststellvorrichtung entsprechend bewegbar ist (nicht dargestellt).

Das Werkzeug 20, 20.1 bzw. der Schleifkörper oder das Werkzeugteil ist mittels der Lager- und Haltevorrichtung so verstellbar und in der jeweiligen Verstellposition feststellbar, daß jede Facettenfläche als Negativfacettenfläche 6aN einarbeitbar ist. Insbesondere bei der Ausgestaltung gemäß Fig. 12 führt die vorhandende Verstellvorrichtung bei einer Bewegung in die Verstellrichtung V2 zugleich eine Kippbewegung zwecks Einstellung des Winkels W3 in Fig. 12 aus, den die Verstellrichtung V2 jeweils zum Werkzeugteil 21a einnimmt.

Die Lager- und Haltevorrichtung kann zur Erzeugung anderer Negativfacettenflächen 6aN so ausgebildet sein, daß das Werkzeug 20, 20.1 auch bezüglich der Winkel W1 bzw. W2 zum zugehörigen Werkzeugteil 21a verstellbar und in der jeweiligen Verstellposition feststellbar ist, siehe Fig. 4a.

Um Negativfacettenflächen 6aN zu erzeugen, die auch quer zur Mittelachse 7 der konkaven Form bzw. in Profilquerrichtung 7b konkav oder vorzugsweise gekrümmt sind, wird das Werkzeug nicht längs der Verstellrichtung V2 bewegt, sondern senkrecht zum Negativ der Facettenflächen 6aN zugestellt.

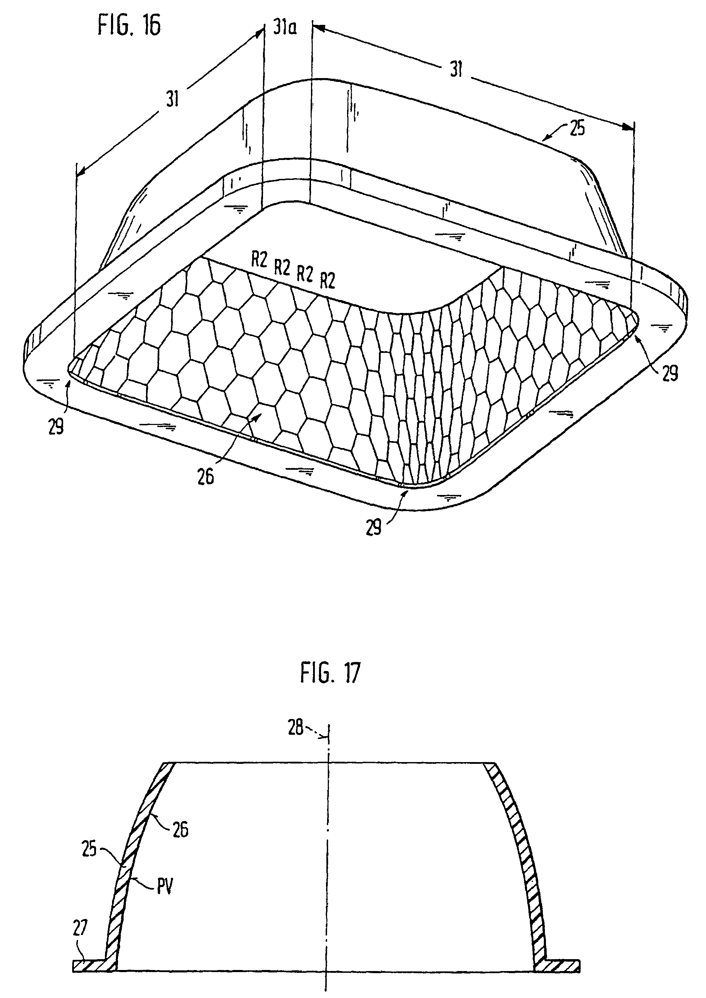

Beim Ausführungsbeispiel nach Fig. 16, bei dem gleiche oder vergleichbare Teile mit gleichen Bezugszeichen versehen sind, ist ein Reflektor 25 mit einer ringförmigen Reflexionsfläche 26 vorgesehen, wobei die Querschnittsform dieser Ringform viereckig im Sinne eines Quadrats oder Rechtecks oder entsprechend mit gerundeten Ecken ausgebildet sein kann. Wie bereits bei der Ausgestaltung nach Fig. 7 kann auch hier der Reflektor 25 an seinem freien Umfangsrand einen querabstehenden Flansch 27 aufweisen, der ebenfalls umlaufend ausgebildet ist.

Bei diesem Reflektor 25 erstreckt sich die Reflexionsfläche 26 in der Längsrichtung der Mittelachse 28 konkav, vorzugsweise gekrümmt und dabei bezüglich der einander gegenüberliegenden Reflexionsflächenabschnitte nach oben konvergent. Zwischen den gerundeten Eckenbereichen 29 erstrecken sich die zugehörigen Umfangsseitenabschnitte 31 gerade. Die ringförmige Reflexionsfläche 26 ist vorzugsweise ganzflächig mit Facetten 6 im Sinne des Ausführungsbeispiels nach Fig. 6 ausgebildet, bei der die sich in den Reihen R2 befindlichen Facettenflächen 6a bezüglich der jeweils benachbarten Reihe R2 versetzt angeordnet sind. In den gerundeten Eckenbereichen 29 ergeben sich dabei Facettenflächen 6a geringerer Breite, wie es Fig. 16 deutlich zeigt.

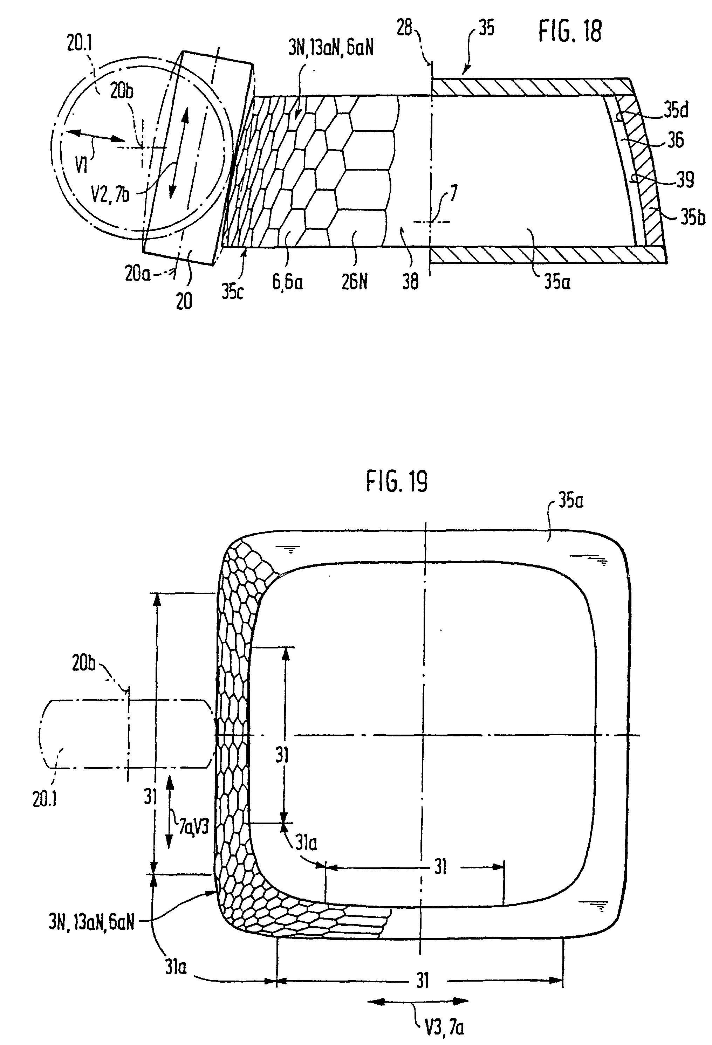

Der Reflektor 25 besteht vorzugsweise aus Kunststoff. Ein solcher Reflektor läßt sich vorteilhaft und kostengünstig durch Spritzgießen oder Spritzpressen in einem entsprechenden Formwerkzeug 35 als Kunststoffpritzteil herstellen, das aus einem inneren ringförmigen Formwerkzeugteil 35a und einem äußeren ringförmigen Formwerkzeugteil 35b besteht, zwischen denen ein Formhohlraum 36 vorhanden ist, der oberseitig und unterseitig geschlossen ist (andeutungsweise dargestellt) und in den zwecks Formung eines Reflektors 25 Kunststoff eingespritzt wird. Die Fig. 18 zeigt mit ihrer rechten Figurenhälfte beide Formwerkzeugteile 35a, 35b, und mit ihrer linken Figurenhälfte nur das innere Formwerkzeugteil 35a. Das innere Formwerkzeugteil 35a weist auf seiner Außenmantelfläche 38 die Reflexionsfläche 26 mit den zugehörigen Facettenflächen 6a als Negativ 26N auf. Die Innenmantelfläche 39 des äußeren Formwerkzeugteils 35b weist die Außenmantelfläche 41 des Reflektors 25 als Negativ auf.

Wie bereits beim Prägewerkzeug 21 lassen sich auch hier die Negativ-Reflektorflächen 6aN durch ein spanabhebendes Werkzeug 20, 20.1, z.B. in Form eines Fräsers oder Schleifkörpers 20 einarbeiten, das mit einer zugehörigen, auch hier nicht dargestellten Verstell- und Einstellvorrichtung so einstellbar und verstellbar ist, daß die Negativfacettenflächen 6aN eingearbeitet werden können, wie es bezüglich des Prägewerks 21 bereits beschrieben worden ist. Bei der vorliegenden Ausgestaltung ist die Vorrichtung jedoch so eingerichtet, daß sie die Reflektorflächen 6aN auf der gesamten ringförmigen Formfläche einzuarbeiten vermag. Die Drehachse 20b dieses spanabhebenden Werkzeugs 20.1 liegt parallel zur geraden Erstreckung 31 der Form- bzw. Reflexionsfläche 26 oder ist in Umfangsrichtung der konkaven, hier gekrümmten Form der Reflexionsfläche bzw. deren Negativ gerichtet.

Es ist auch möglich, ein walzenförmiges spananhebendes Werkzeug 20.1 zu benutzen, das eine ballige Arbeitsfläche aufweist, wie es in den Fig. 18 und 19 andeutungsweise ebenfalls dargestellt ist. Auch dieses Werkzeug 20b ist mit der zugehörigen, nicht dargestellten Lager- und Haltevorrichtung im vorbeschriebenen Sinne so einstellbar, daß die Negativfacettenflächen 6aN unter Berücksichtigung der jeweils vorhandenen Winkel einarbeitbar sind, wie es vorbeschrieben worden ist.

Sofern die Facettenflächen 6a auch quer zur Krümmungsachse bzw. in Umfangsrichtung der Krümmung konkav, insbesondere gekrümmt sein sollen, kann ein Werkzeug 20 verwendet werden, das eine ballige Umfangs- bzw. Arbeitsfläche aufweist, wie es auch in Fig. 13 andeutungsweise dargestellt ist.

In den Fig. 18 und 19 sind die Negativfacettenflächen 6aN nur auf einem Teil der Formfläche 35c dargestellt und zwar aus Vereinfachungsgründen. In Wirklichkeit befinden sich die Negativfacettenflächen 6aN auf der gesamten Formfläche 35c. Die Formfläche 35d weist im Gegensatz zum Prägewerkzeug 21 keine Facettenflächen auf, sondern sie ist normal gekrümmt.

Mit den vorbeschriebenen Werkzeugen 20, 20.1 lassen sich die Negativfacettenflächen 6aN auf der gesamten Formfläche 35c erzeugen. In den gerundeten Bereichen 31a in den Ecken der grundsätzlich viereckigen Ringform ergeben sich dabei Negativfacettenflächen 6aN geringerer Breite, wie es in den Fig. 18 und 19 dargestellt ist. Für entsprechende Bewegungen ist die Lager- und Haltevorrichtung eingerichtet.

Im Rahmen der Erfindung ist es möglich, einen von einem flüssigen oder breiigen ' Material, insbesondere Kunststoff, zu einem festen Material erstarrenden Reflektor mit nur einem Werkzeugteil, z.B. dem Werkzeugteil 21a, dadurch herzustellen, daß das Material auf die Negativfacettenflächen 6aN aufgeschichtet oder aufgespritzt wird, um es dann erstarren zu lassen.

Insbesondere dann, wenn ein vorbeschriebener Reflektor aus Kunststoff besteht, ist es vorteilhaft, die Reflexionsfläche nach der Abnahme vom Werkzeugteil mit einer Reflexions- oder Spiegelschicht zu beschichten, vorzugsweise zu bedampfen. Dies kann z.B. eine dünne Beschichtung aus Metall sein.

Nachfolgend wird ein Verfahren zur Herstellung eines Reflektors 1, 12, 25 zusammenfassend beschrieben.

Es wird zunächst ein Formwerkzeugteil, z.B. ein Kern im Sinne des Formwerkzeugteils 35a, erzeugt, der bezügl. eines Reflektors 25 nach Fig. 16 und 17 im Horizontalschnitt eine rechteckige oder quadratische Form mit abgerundeten Ecken aufweisen kann und im Vertikalschnitt oberseitig offen oder geschlossen sein kann, wobei die eine Formfläche bildende Mantelfläche im vertikalen Schnitt konvex geformt ist, siehe Formfläche 35c bzw. Negativbasisfläche 26N. In diese Außenseiten werden spanabhebend Negativfacettenflächen 6aN eingearbeitet, z.B. gefräst oder insbesondere geschliffen, deren Form - längs und quer zur Profillängsrichtung 7a gesehen - jeweils von der Form der Formbasisfläche 26N abweicht. Dazu könnten die vorbeschriebenen Werkzeuge 20 oder 20.1 benützt werden. Mit den vorbeschriebenen Zustell-, Rückstell- und Verstellbewegungen V1, V2, V3 lassen sich die Negativfacettenflächen 6aN hintereinander in den Reihen R1 oder R2 einarbeiten, wie es vorbeschrieben ist. Die jeweilige Bewegung kann von einer das Werkzeug 20, 20.1 haltenden Vorrichtung und/oder einer das Werkzeugteil 35a haltenden Vorrichtung ausgeführt werden.

Nachdem die Negativbasisfläche 26N bzw. Formfläche 35c bearbeitet und die Negativfacettenflächen 6aN eingearbeitet sind, wird ein Trägerteil oder eine Trägerschicht im flüssigen oder breiigen Zustand auf die Formfläche 35c aufgebracht, z. B. aufgespritzt, wobei dieses Material, insbesondere Kunststoff, sich nach dem Auftragen verfestigt und somit den Reflektor 25 bildet. Nach der Verfestigung wird der Reflektor 25 vom Formwerkzeug 35a getrennt, und dann wird die Reflexionsfläche 26 des Reflektors 25 mit einer Reflexions- oder Spiegelschicht beschichtet. Dies kann in vorteilhafter Weise durch Bedampfen eines diese Schicht bildenden Materials, insbesondere ein Metall, erfolgen. Es kann sich auch um ein flüssiges oder breiiges Material handeln, das sich nach dem Auftrag zu der Reflexionsschicht vorzugsweise selbsttätig verfestigt.

Die Ausbildung der Reflexions- bzw. Spiegelschicht kann auch gleichzeitig beim Formen des Reflektors erfolgen, indem die Reflexions- bzw. Spiegelschicht vor dem Auftragen der Trägerschicht auf das Formwerkzeug oder gleichzeitig mit dem Auftragen der Trägerschicht geschaffen wird, z.B. dadurch, daß ein Material für die Trägerschicht benützt wird, das reflektierend ist.

Es ist auch möglich, das die Trägerschicht bildende zunächst formfähige Material in einen geschlossenen Formraum, z.B. zwischen zwei oder mehr Formteilen, hier die Formwerkzeugteile 35a, 35b, zu gießen oder einzuspritzen und den verfestigten Träger von den Formteilen zu trennen.

Es ist außerdem auch möglich, zunächst die Reflexionsschicht und dann das Trägerteil bzw. die Trägerschicht auf das Formteil aufzutragen, wobei die Materialien ein Verbundteil, nämlich den Reflektor, bilden.

## Patentansprüche

1. Reflektor (1; 12; 25) für eine Leuchte (L) mit einer Lichtquelle (2), wobei der Reflektor (1; 12; 25) einen im wesentlichen geraden profilierten Abschnitt aufweist, der auf seiner der Lichtquelle (2) zugewandten Seite Facettenflächen (6a) aufweist,
**dadurch gekennzeichnet,**
**daß** die Facettenflächen (6a) die Form von konkaven oder konvexen Zylindermantelteilflächen oder Trommelmantelteilflächen aufweisen, deren Krümmungsachsen (6b; 20a) quer zur Profillängsachse (7a) verlaufen.

2. Reflektor nach Anspruch 1,
**dadurch gekennzeichnet,**
**daß** die Facettenflächen (6a) im Profillängsschnitt und/oder im Profilquerschnitt ineinander übergehen oder aneinander angrenzen oder einen Abstand voneinander aufweisen.

3. Reflektor nach Anspruch 1 oder 2,
**dadurch gekennzeichnet,**
**daß** die Facettenflächen (6a) in sich quer zueinander erstreckenden Reihen (R1, R2) angeordnet sind.

4. Reflektor nach Anspruch 3,
**dadurch gekennzeichnet,**
**daß** die Reihen (R1, R2) einen rechten Winkel oder einen spitzen oder stumpfen Winkel (W3) zwischen sich einschließen.

5. Reflektor nach Anspruch 3 oder 4
**dadurch gekennzeichnet,**
**daß** die Facettenflächen (6a) in den benachbarten Reihen (R2) der einen ReihenRichtung versetzt zueinander angeordnet sind, vorzugsweise um ein Versetzungsmaß (v), das etwa der halben zugehörigen Abmessung (a) der Facettenflächen (6a) entspricht.

6. Reflektor nach einem der vorherigen Ansprüche,
**dadurch gekennzeichnet,**
**daß** wenigstens die die Facettenflächen aufweisende Wand oder aufweisenden Wände des Reflektors (1, 12) aus einem verformbaren Material bestehen, insbesondere aus Stahl oder Aluminium, und die Facettenflächen (6a) angeformt sind, vorzugsweise kalt angeformt sind.

7. Reflektor nach Anspruch 6,
**dadurch gekennzeichnet,**
**daß** die Facettenflächen (6a) durch Prägen oder Drücken zwischen zwei Formwerkzeugteilen (21a, 21b) eines Formwerkzeugs (21) geformt sind.

8. Reflektor nach einem der vorherigen Ansprüche,
**dadurch gekennzeichnet,**
**daß** er aus Kunststoff besteht.

9. Reflektor nach Anspruch 8,
**dadurch gekennzeichnet,**
**daß** die Facettenflächen (6a) beim Aufschichten oder Anspritzen oder Spritzgießen oder Spritzpressen des Reflektors (25) angeformt sind.

10. Reflektor nach einem der vorherigen Ansprüche,
**dadurch gekennzeichnet,**
**daß** die Querschnittsform des Reflektors (25) ringförmig ist, vorzugsweise mit sich in Umfangsrichtung gerade erstreckenden Seitenwänden (31) und ggf. gerundeten Ecken (31a) wobei die Facettenflächen an der Innenwandung des Reflektors (25) angeordnet sind.

11. Reflektor nach Anspruch 10,
**dadurch gekennzeichnet,**
**daß** die Innenwandung (29) des Reflektors (25) - quer zur Mittelachse (28) gesehen - konkav geformt ist, insbesondere gekrümmt, vorzugsweise kreisbogenförmig gekrümmt ist.

12. Reflektor einem der vorherigen Ansprüche,
**dadurch gekennzeichnet,**
**daß** er zwei längliche einander spiegelbildlich gegenüberliegend und parallel zueinander angeordnete Reflektorwände in Profilform (PV) aufweist, die in der Profilquerrichtung konkav und/oder konvex ausgebildet sind, insbesondere gekrümmt sind, und zwischen denen sich Querreflektoren (12) mit beidseitig vorhandenen Reflexionsflächen (13a) erstrecken, und daß die Reflektorwände und/oder die Reflexionsflächen (13a) die Facettenflächen (6a) aufweisen.

13. Leuchte mit mindestens einer Lichtquelle (2) und einem Reflektor (1; 12; 25),
**dadurch gekennzeichnet,**
**daß** der Reflektor (1; 12; 25) nach einem der vorherigen Ansprüche ausgebildet ist.

## Claims

1. Reflector (1; 12; 25) for a luminaire (L) having a light source (2), the reflector (1; 12; 25) having a profiled section which is substantially straight and which has on its side towards the light source (2) facet surfaces (6a),
**characterised in that**,
the facet surfaces (6a) have the form of concave or convex cylinder-envelope part surfaces or barrel-envelope part surfaces the axes of curvature (6b; 20a) of which run transversely of the longitudinal profile axis (7a).

2. Reflector according to claim 1,
**characterised in that**,
the facet surfaces (6a), in the longitudinal profile section and/or in the transverse profile section, transition into one another or border on one another or have a spacing from one another.

3. Reflector according to claim 2,
**characterised in that**,
the facet surfaces (6a) are arranged in rows (R1, R2) which extend transversely of one another.

4. Reflector according to claim 3,
**characterised in that**,
the rows (R1, R2) include between them a right angle or an acute or obtuse angle (W3).

5. Reflector according to claim 3 or 4,
**characterised in that**,
the facet surfaces (6a) in the neighbouring rows (R2) of one row direction are arranged offset one to another preferably by an offset amount (v) which corresponds to about half of the associated dimension (a) of the facet surfaces (6a).

6. Reflector according to an preceding claim,
**characterised in that**,
at least the wall or walls of the reflector (1, 12) having the facet surfaces are of a mouldable material, in particular of steel or aluminium, and the facet surfaces (6a) are moulded on, preferably cold moulded.

7. Reflector according to claim 6,
**characterised in that**,
the facet surfaces (6a) are formed by means of embossing or pressing between two mould tool parts (21a, 21b) of a mould tool (21).

8. Reflector according to any preceding claim,
**characterised in that**,
it is of plastics.

9. Reflector according to claim 8,
**characterised in that**,
the facet surfaces (6a) are formed upon the layering or spraying or injection moulding or injection pressing of the reflector (25).

10. Reflector according to any preceding claim,
**characterised in that**,
the cross-sectional shape of the reflector (25) is annular, preferably with side walls (31) extending straight in the circumferential direction and, if applicable, rounded corners (31a), the facet surfaces being arranged on the inner walling of the reflector (25).

11. Reflector according to claim 10,
**characterised in that**,
the inner walling (29) of the reflector (25) - seen transversely of the middle axis (28) - is concavely shaped, in particular curved, preferably curved in the shape of an arc of a circle.

12. Reflector according to any preceding claim,
**characterised in that**,
it has two reflector walls in profile shape (PV), arranged longitudinally opposite one another in a mirror-image manner and parallel to one another, which reflector walls are formed concavely and/or convexly in the profile transverse direction, in particular are curved, and. between which there extend transverse reflectors (12), having reflection surfaces (13a) present on both sides, and **in that** the reflector walls and/or the reflection surfaces (13a) have the facet surfaces (6a).

13. Luminaire having at least one light source (2) and a reflector (1; 12; 25),
**characterised in that**,
the reflector (1; 12; 25) is formed in accordance with any preceding claim.

## Revendications

1. Réflecteur (1; 12; 25) pour une lampe (L) comportant une source de lumière (2), le réflecteur (1; 12; 25) possédant une section profilée essentiellement rectiligne, qui possède, sur son côté tourné vers la source de lumière (2), des surfaces formant facettes (6a), **caractérisé en ce que** les surfaces formant facettes (6a) possèdent la forme de surfaces partielles d'enveloppes cylindriques ou des surfaces partielles d'enveloppes de tambour concaves ou convexes, dont les axes de courbure (6b; 20a) s'étendent transversalement par rapport à l'axe longitudinal (7a) du profil.

2. Réflecteur selon la revendication 1, **caractérisé en ce que** les surfaces formant facettes (6a) se prolongent les unes par les autres ou sont contiguës ou sont séparées par une distance, dans la section longitudinale de profil et/ou dans la section transversale de profil.

3. Réflecteur selon la revendication 1 ou 2, **caractérisé en ce que** les surfaces formant facettes (6a) sont disposées suivant des rangées (R1, R2) qui s'étendent transversalement entre elles.

4. Réflecteur selon la revendication 3, **caractérisé en ce que** les rangées (R1, R2) font entre elles un angle droit ou un angle aigu ou obtus (W3).

5. Réflecteur selon la revendication 3 ou 4, **caractérisé en ce que** les surfaces formant facettes (6a) sont situées dans les rangées voisines (R1, R2) correspondant à une direction de rangée en étant décalées les unes par rapport aux autres, et ce de préférence d'un pas de décalage (v), qui correspond approximativement à la moitié de la dimension associée (a) des surfaces formant facettes (7a).

6. Réflecteur selon l'une des revendications précédentes, **caractérisé en ce qu'**au moins la ou les parois du réflecteur (1, 12), possédant les surfaces formant facettes, sont réalisées en un matériau déformable, notamment en acier ou en aluminium, et les surfaces formant facettes (6a) sont formées par moulage, de préférence sont formées par moulage à froid.

7. Réflecteur selon la revendication 6, **caractérisé en ce que** les surfaces formant facettes (6a) sont formées par estampage ou par compression entre deux parties (21a, 21b) d'un outil de formage (21).

8. Réflecteur selon l'une des revendications précédentes, **caractérisé en ce qu'**il est réalisé en une matière plastique.

9. Réflecteur selon la revendication 8, **caractérisé en ce que** les surfaces formant facettes (6a) sont conformées lors de la formation de couches ou bien par application par injection ou coulée par injection ou injection avec pressage du réflecteur (25).

10. Réflecteur selon l'une des revendications précédentes, **caractérisé en ce que** la forme en coupe transversale du réflecteur (25) est annulaire, de préférence avec des parois latérales (32) qui s'étendent selon une disposition rectiligne dans la direction périphérique et éventuellement des coins arrondis (31a), les surfaces formant facettes étant disposées sur la paroi intérieure du réflecteur (25).

11. Réflecteur selon la revendication 10, **caractérisé en ce que** la paroi intérieure (29) du réflecteur (25) est réalisée avec une forme concave, notamment cintrée, de préférence cintrée en forme d'arc de cercle - lorsqu'on regarde transversalement par rapport à l'axe médian (28).

12. Réflecteur selon l'une des revendications précédentes, **caractérisé en ce qu'**il comporte deux parois allongées à forme profilée (PV) disposées symétriquement l'une par rapport à l'autre et parallèles entre elles et qui sont agencées avec une forme concave et/ou convexe dans la direction transversale du profil, notamment sont cintrées, et entre lesquelles s'étendent des réflecteurs transversaux (12) possédant des surfaces réfléchissantes (13a) présentes des deux côtés, et que les parois du réflecteur et/ou les surfaces réfléchissantes (13a) possèdent les surfaces formant facettes (6a).

13. Lampe comportant au moins une source de lumière (2) et un réflecteur (1; 12; 25), **caractérisée en ce que** le réflecteur (1; 12; 25) est agencé selon l'une des revendications précédentes.
